# EUROPÄISCHE PATENTSCHRIFT

(11) **EP 2 124 308 B1**
(45) Veröffentlichungstag und Bekanntmachung des Hinweises auf die Patenterteilung: **30.04.2014**
(21) Anmeldenummer: 09002906.7
(22) Anmeldetag: 28.02.2009
(51) Int. Cl.: H02G 3/12, H02G 3/18

(54) **Elektrisches Installationsgerät**
Electric installation device
Appareil d'installation électrique

(30) Priorität: 16.05.2008 DE 102008023983
(43) Veröffentlichungstag der Anmeldung: 25.11.2009
(73) Patentinhaber: Berker GmbH & Co. KG, 58579 Schalksmühle (DE)
(72) Erfinder: Kirk, Anne, 58579 Schalksmühle (DE); Göhl, Dieter, 58507 Lüdenscheid (DE); Bröcher, Egon, 57482 Wenden (DE); Eich, Wolfgang, 57482 Wenden (DE)

(56) Entgegenhaltungen:
- EP-A1- 0 654 881
- EP-A1- 0 915 537
- EP-A2- 0 240 916
- DE-U1- 20 013 233

## Beschreibung

Die vorliegende Erfindung geht von einem gemäß Oberbegriff des Hauptanspruches konzipierten elektrischen Installationsgerät für die Gebäudesystemtechnik aus.

Derartige elektrische Installationsgeräte sind in der Regel dafür vorgesehen, in sogenannte Installationsdosen montiert zu werden. Damit auf einfache Art und Weise eine zuverlässige Befestigung der elektrischen Installationsgeräte gewährleistet ist, sind diese mit sogenannten Spreizkrallen ausgerüstet, welche über Spreizschrauben betrieben werden. Über die Spreizschrauben können die Spreizkrallen je nach Bedarf in eine zurückgezogene "Parkposition" und eine ausgefahrene "Festlegungsposition" verstellt werden.

Durch die EP 0 915 537 A1 ist ein dem Oberbegriff des Hauptanspruches entsprechendes elektrisches Installationsgerät bekannt geworden. Dieses elektrische Installationsgerät weist ein aus Kunststoff bestehendes, zur Aufnahme von Funktionselementen vorgesehenes Gehäuse auf, an welchem ein Träger und jeweils zwei Befestigungseinrichtungen festgelegt sind. Die Spreizkrallen einer jeden Befestigungseinrichtung weisen eine flächig ausgeführte Basis auf, an die zwei sich von dieser wegerstreckende Krallenarme derart angeformt sind, so dass die Spreizkralle eine U-förmige Kontur aufweist. Die flächig ausgebildete Basis wirkt einerseits direkt mit dem Kopf der Spreizschraube zusammen und kommt andererseits direkt an eine, an das Gehäuse angeformte Lageranordnung zur Anlage. Die Montage von Spreizkrallen ist bei diesem elektrischen Installationsgerät schon vergleichsweise einfach. Für die automatische Rückstellung der Spreizkrallen sind jedoch zusätzliche Federelemente notwendig, welche bei der Montage einen entsprechenden Aufwand verursachen.

Durch die DE 40 28 766 C2 und die DE 198 12 556 B4 sind weitere elektrische Installationsgeräte bekannt geworden. Diese elektrischen Installationsgeräte weisen jeweils ein aus Kunststoff bestehendes, zur Aufnahme von Funktionselementen vorgesehenes Gehäuse bzw. Sockelteil auf, an welchem ein Träger und jeweils zwei Befestigungseinrichtungen festgelegt sind. Jede Befestigungseinrichtung weist eine im Wesentlichen L-förmig ausgebildete Spreizkralle und eine Spreizschraube auf. Zur Lagerung der Spreizkrallen ist dabei entweder eine aus Metall hergestellte separate Lageranordnung oder aber eine an den aus Metall bestehenden Träger angeformte Lageranordnung vorgesehen. Solche Lageranordnungen erfordern jedoch einen bestimmten fertigungstechnischen Aufwand. Durch dermaßen ausgebildete Befestigungseinrichtungen sind bereits hohe Auszugskräfte für das elektrische Installationsgerät realisiert.

Außerdem ist durch die EP 0 654 881 A1 ein elektrisches Installationsgerät bekannt geworden, dessen Spreizkrallen jeweils einen angeformten, als Montagehilfe vorgesehenen, Noppen aufweisen.

Des Weiteren ist durch die EP 0 240 916 A2 eine Doppelsteckdose bekannt geworden, welche ein Gehäuse aufweist, dessen Unterteil beispielsweise aus thermoplastischen Kunststoff, und dessen Oberteil vorzugsweise aus duroplastischem Material besteht.

Zudem ist es durch die DE 200 13 233 U1 bekannt, bei einem elektrischen Installationsgerät eine Aufnahmeausbuchtung im Gehäuse für die Aufnahme einer Spreizkralle vorzusehen.

Ausgehend von derart ausgebildeten elektrischen Installationsgeräten liegt der vorliegenden Erfindung die Aufgabe zugrunde, ein elektrisches Installationsgerät zu schaffen, welches bei Realisierung besonders hoher Auszugskräfte eine für die Lagerung der Spreizkrallen notwendige Lageranordnung aufweist, die noch weiter vereinfacht ist und zudem eine besonders einfache Montage der Spreizkrallen und zugehörigen Spreizschrauben ermöglicht.

Erfindungsgemäß wird diese Aufgabe durch die im Hauptanspruch angegebenen Merkmale gelöst.

Bei einer solchen Ausbildung ist besonders vorteilhaft, dass jede Spreizkralle zur Erzeugung von besonders hohen Auszugskräften bei vergleichsweise einfacher Herstellung sehr stabil ausgeführt ist und sich bei entsprechender Ausbildung des Gehäuses auf einfache Art und Weise in eine versteckt angeordnete "Parkposition" bringen lässt, in welcher die Spreizkralle nicht über die Außenkontur des Gehäuses hervorsteht. Eine solche Ausbildung hat den Vorteil, dass zum einen für den Benutzer bzw. Installateur das Verletzungsrisiko bedingt durch die in ihrer "Parkposition" nicht hervorstehende Befestigungskrallen beim Hantieren vermieden ist und dass es zum anderen beim Einführen des elektrischen Installationsgerätes in die Installationsdose nicht zu Beschädigungen z. B. von elektrischen Leitern durch die Spreizkrallen kommen kann.

Zudem ist besonders vorteilhaft, dass eine galvanische Trennung des Trägers von den Befestigungseinrichtungen bzw. Spreizkrallen realisiert ist, um im Fehlerfalle Spannungsverschleppungen auf den Träger wirkungsvoll zu vermeiden.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert, dabei zeigt:
- Fig. 1:: prinziphaft ein solches elektrisches Installationsgerät räumlich in Explosionsdarstellung;
- Fig. 2:: prinziphaft einen Zusammenbau eines solchen elektrischen Installationsgerätes in der Draufsicht;
- Fig. 3:: prinziphaft einen Zusammenbau eines solchen elektrischen Installationsgerätes in der Seitenansicht;
- Fig. 4:: prinziphaft eine Spreizkralle als Detail;
- Fig. 5:: prinziphaft die Befestigungsmittel des Gehäuses und des Trägers als Detail.

Wie aus den Figuren hervorgeht, besteht ein solches elektrisches Installationsgerät im Wesentlichen aus einem aus Kunststoff bestehenden, zur Aufnahme von Funktionselementen vorgesehenen Gehäuse, an welchem ein Träger 1 und zwei jeweils eine Spreizkralle 2 und eine Spreizschraube 3 aufweisende Befestigungseinrichtungen festgelegt sind. Das Gehäuse weist zur Aufnahme jeder der beiden Befestigungseinrichtungen eine Tasche 4 auf. Das Gehäuse besteht aus einem aus Duroplast gefertigten Sockelteil 5 und einem aus Thermoplast gefertigten Deckelteil 6. An das Sockelteil 5 sind zwei für das direkte Zusammenwirken mit den beiden Spreizkrallen 2 vorgesehene Lageranordnungen 7 angeformt. Weil die beiden Lageranordnungen 7 aus Duroplast bestehen und blockartig ausgeführt sind, ist eine hohe Formstabilität über eine lange Betriebsdauer sichergestellt.

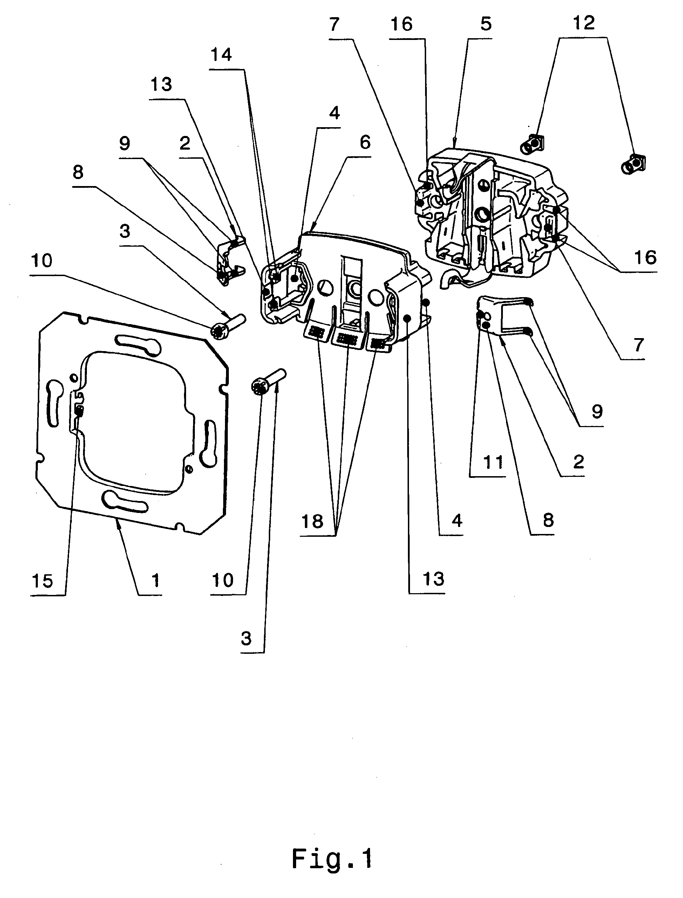

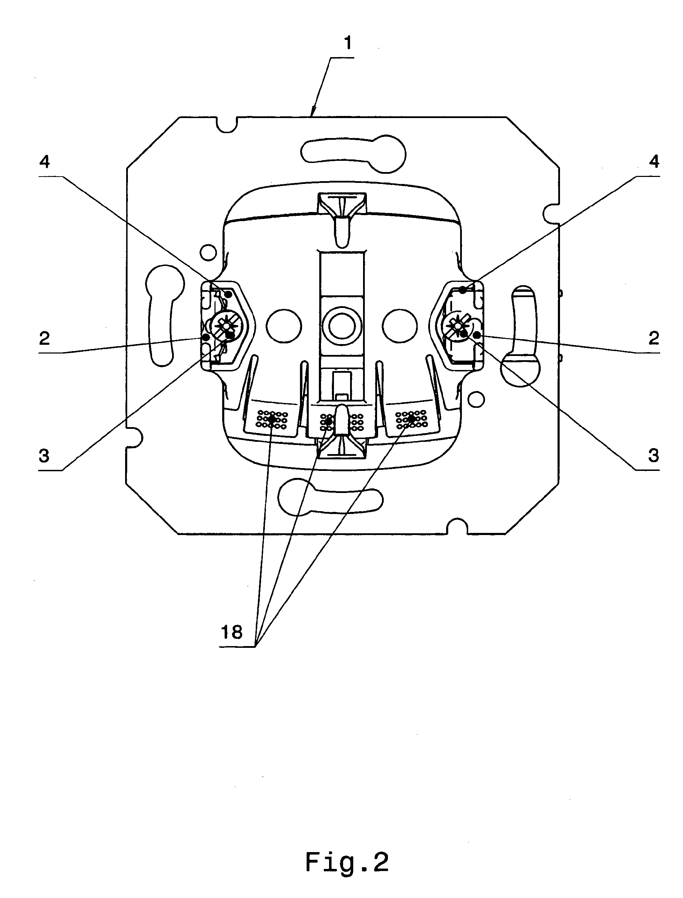

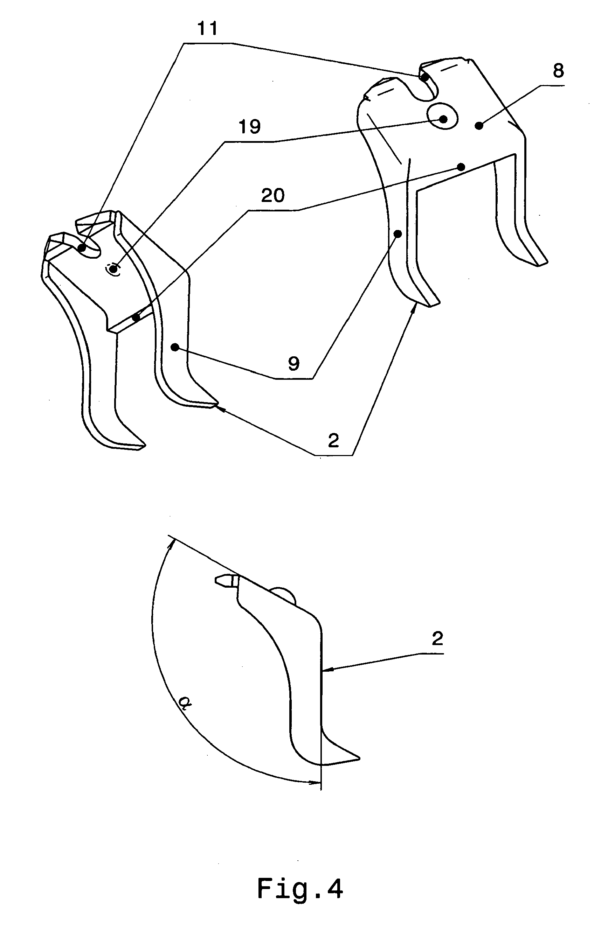

Wie des weiteren insbesondere aus Figur 1, Figur 2 und Figur 4 hervorgeht, weisen die beiden Spreizkrallen 2 jeweils eine im Wesentlichen U-förmige Kontur auf, wobei an die flächig ausgeführte Basis 8 zwei sich von dieser wegerstreckende Krallenarme 9 angeformt sind. Die flächig ausgebildete Basis 8 einer jeden Spreizkralle 2 wirkt einerseits mit dem Kopf 10 der zugeordneten Spreizschraube 3 zusammen und kommt andererseits jeweils direkt an der an das Gehäuse angeformten Lageranordnung 7 zur Anlage. Die beiden Krallenarme 9 sind jeweils an zwei gegenüberliegende Seitenbereiche der flächig ausgeführten Basis 8 angeformt und rechtwinklig davon abgebogen, so dass die U-förmige Kontur entsteht. Gleichzeitig verlaufen die beiden Krallenarme 9 in Bezug auf die flächig ausgeführte Basis 8 unter einem Winkel α von ca. 120 Grad und erstrecken sich stirnseitig weg von dieser Basis 8. Zudem ist in der flächig ausgebildeten Basis 8 einer jeden Spreizkralle 2 ein Schlitz 11 zur Durchführung des Schaftes der Spreizschraube 3 vorhanden. Auf einfache Art und Weise sind somit besonders stabil ausgeführte Spreizkrallen 2 realisiert, welche mit einer besonders einfach herstellbaren stabilen Lageranordnung 7 zusammenwirken. Bedingt durch die vorstehend beschriebene Ausbildung der Spreizkrallen 2 und die blockartig gestaltete stabile Lageranordnung 7 lassen sich die Spreizkrallen 2 zudem besonders schnell und einfach in die zur Aufnahme vorgesehenen Taschen 4 montieren. Vorteilhafterweise entstehen dabei sehr gute kinematische Eigenschaften, so dass zum einen keine zusätzlichen Elemente, wie z. B. Federn für die Rückstellung der Spreizkrallen 2 benötigt werden und zum anderen ebenfalls ohne Zusatzelemente besonders hohe Auszugskräfte für das elektrische Installationsgerät bei einfacher Handhabung realisiert sind. Wie bereits vorstehend beschrieben, besteht jede der beiden Befestigungseinrichtungen lediglich aus der sich an der Lageranordnung 7 abstützenden Spreizkralle 2, der zugeordneten Spreizschraube 3 und gegebenenfalls aus einer in das Sockelteil 5 montierten einfach ausgeführten Schraubbuchse 12. Vorteilhafterweise ist die Lageranordnung 7, wie bereits beschrieben, einstückig an das Sockelteil 5 des Gehäuses angeformt. Zudem ist an die flächig ausgebildete Basis 8 einer jeden Spreizkralle 2 ein Haltekümpel 19 angeformt, um die Spreizkralle 2 gegen Herausrutschen aus ihrer Tasche 4 zu sichern. Der Haltekümpel 19 steht dazu in Wirkverbindung mit der zugeordneten Innenseite einer der beiden an das Decketeil 6 angeformten Haltewände 13. Damit die Spreizkrallen 2 besonders stabil ausgeführt sind, ist stirnseitig an die Spreizkralle 2 ein Verbindungssteg 20 angeformt, welcher zwischen den beiden Krallenarmen 9 angeordnet ist.

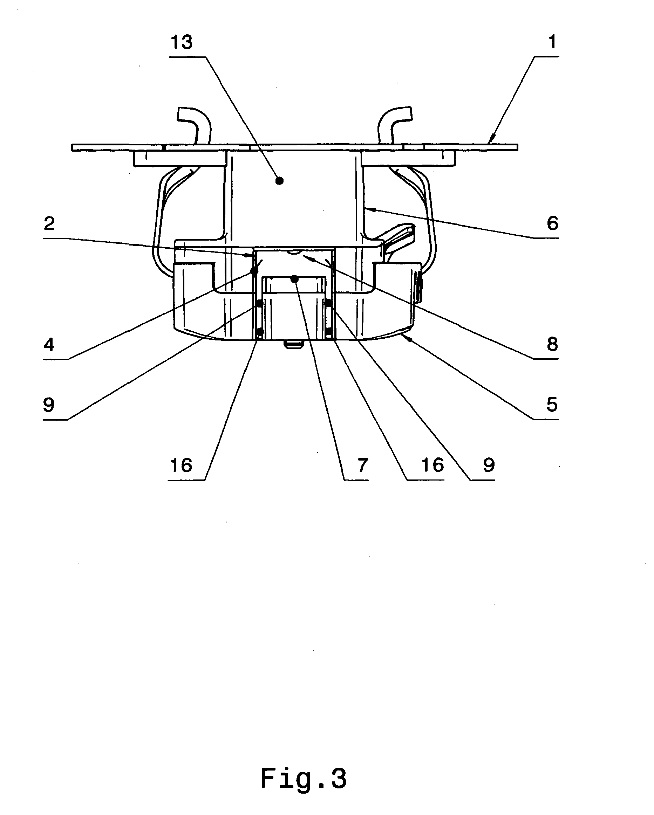

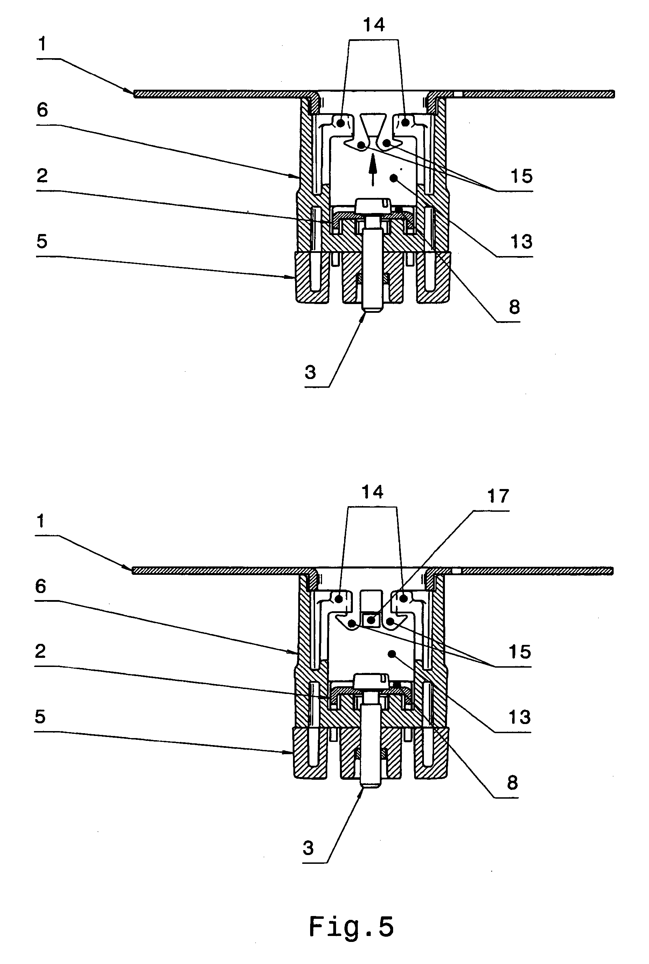

Wie des weiteren insbesondere aus Figur 1, Figur 3 und Figur 5 hervorgeht, sind an das Deckelteil 6 des Gehäuses zur Befestigung des Trägers 1 zwei Haltewände 13 angeformt. Zur Befestigung des Trägers 1 am Deckelteil 6 weist dieses als Rastnasen 14 ausgebildete Befestigungsmittel auf, welche mit als Rasthaken 15 ausgebildeten Befestigungsmitteln des Trägers 1 zusammenwirken. Die Rastnasen 14 sind einstückig an die Innenseite der beiden Haltewände 13 des Deckelteils 6 angeformt und die Rasthaken 15 sind einstückig an die Unterseite des Trägers 1 angeformt. Es sind vier Rastnasen 14 und vier Rasthaken 15 vorgesehen, welche paarweise miteinander in Wirkverbindung kommen. Auf einfache Art und Weise ist somit eine wirkungsvolle und sichere Befestigungsmöglichkeit für den Träger 1 geschaffen. Die Befestigung des Trägers 1 am Deckelteil 6 des Gehäuses erfolgt indem die als Rasthaken 15 ausgebildeten Befestigungsmittel des Trägers 1 während des Montageprozesses gespreizt werden, so dass diese hintergreifend an den als Rastnasen 14 ausgebildeten Befestigungsmitteln des Deckelteils 6 zur Anlage kommen. Damit die Rasthaken 15 des Trägers 1 nicht mehr zurückgestellt werden können, wird zudem während des Montageprozesses durch einen Formstempel ein Sicherungskümpel 17 aus jeder der beiden Haltewände 13 herausgedrückt, welcher zwischen den beiden Rasthaken 15 eines jeden der beiden Rasthakenpaare zu liegen kommt. Auf einfache Art und Weise ist somit der Träger 1 besonders sicher am Deckelteil 6 festgelegt. Figur 5 weist zwei Abbildungen auf, die den Montageprozess bzw. Befestigungsvorgang besonders augenfällig verdeutlichen. Außerdem sind die Lösetasten 18 für die -der Einfachheit halber nicht dargestellten- Klemmfedern der Kontakte einstückig an das Deckelteil 6 angeformt.

Damit die Spreizkrallen 2 in ihrer "Parkposition" nicht über die Kontur des Gehäuses hinausstehen, ist eine versteckte Aufnahme der Krallenarme 9 in entsprechend ausgebildeten Aufnahmeausnehmungen 16 des Gehäuses vorgesehen. Die Aufnahmeausnehmungen 16 sind unterhalb der Tasche 4 bzw. als Ergänzung der Tasche 4 in die Außenwandung des Sockelteils 5 eingeformt. Für jede Spreizkralle 2 sind zwei schlitzartige Aufnahmeausnehmungen 16 vorgesehen. Diese sind so tief ausgeführt, so dass die Krallenarme 9 in ihrer "Parkposition" gänzlich in die Aufnahmeausnehmungen 16 eintauchen. Somit ist sichergestellt, dass zum einen für den Benutzer bzw. Installateur das Verletzungsrisiko bedingt durch die in ihrer "Parkposition" nicht hervorstehende Befestigungskrallen vermieden ist und dass es zum anderen beim Einführen des elektrischen Installationsgerätes in die Installationsdose nicht zu Beschädigungen z. B. von elektrischen Leitern durch die Spreizkrallen 2 kommen kann. Erst wenn sich das elektrische Installationsgerät lagegerecht in der Installationsdose befindet, werden die Spreizkrallen 2 ausgehend von der "Parkposition" in ihre "Festlegungsposition" verstellt, indem die zugeordnete Spreizschraube 3 entsprechend verstellt wird.

Weiterhin ist bei einer solchen Ausführung vorteilhaft, dass auf einfache Art und Weise eine galvanische Trennung zwischen dem Träger 1 und den beiden Befestigungseinrichtungen bzw. Spreizkrallen 2 realisiert ist, weil der Träger 1 nur mit dem aus Thermoplast hergestellten Deckelteil 6 in Verbindung steht und ein entsprechender Isolierabstand von 3 mm zwischen dem Träger 1 und den Spreizkrallen 2 bzw. Spreizschrauben 3 eingehalten wird. Beim vorliegenden Ausführungsbeispiel ist der Träger 1 als sogenannter Tragring ausgeführt und das elektrische Installationsgerät stellt einen Funktionseinsatz für eine Schutzkontaktsteckdose dar. Der erfindungsgemäße Gedanke ist aber auch auf andere elektrische Installationsgeräte, wie z. B. Schalter, Dimmer, Kommunikationsapparate, Busapparate usw. ohne weiteres übertragbar. Auch kann der Träger 1 ohne weiteres als Tragplatte ausgeführt sein.

## Patentansprüche

1. Elektrisches Installationsgerät für die Gebäudesystemtechnik mit einem aus Kunststoff bestehenden, zur Aufnahme von Funktionselementen vorgesehenen aus einem Sockelteil (5) und einem Deckelteil bestehen Gehäuse, an welchem ein Träger (1) festgelegt ist und welches zur Halterung in einer Installationsdose mit zumindest einer, eine Spreizkralle (2) und eine Spreizschraube (3) aufweisenden Befestigungseinrichtung ausgerüstet ist, wobei die Spreizkralle (2) eine flächig ausgeführte Basis (8) aufweist, an die zwei sich von dieser wegerstreckende Krallenarme (9) derart angeformt sind, so dass die Spreizkralle (2) eine U-förmige Kontur aufweist, und dass die flächig ausgebildete Basis (8) einerseits direkt mit dem Kopf (10) der Spreizschraube (3) zusammenwirkt und andererseits direkt an eine an das Gehäuse angeformte Lageranordnung (7) zur Anlage kommt, **dadurch gekennzeichnet, dass** das Deckelteil (6) des Gehäuses zur Aufnahme der Spreizkralle (2) jeder Befestigungseinrichtung eine Tasche (4) aufweist und dass zur Aufnahme der beiden Krallenarme (9) einer jeden Spreizkralle (2) entsprechend zwei schlitzartige Aufnahmeausnehmungen (16) unterhalb der Tasche (4) in die Außenwandung des Sockelteils (5) eingeformt sind und dass an die flächig ausgebildete Basis (8) einer jeden Spreizkralle (2) ein Haltekümpel (19) angeformt ist, welcher mit der zugeordneten Innenseite einer der beiden an das Deckelteil (6) angeformten Haltewände (13) in Wirkverbindung kommt.

2. Elektrisches Installationsgerät nach Anspruch 1, **dadurch gekennzeichnet, dass** in der flächig ausgeführten Basis (8) der Spreizkralle (2), ein die Durchführung des Schaftes der Spreizschraube (3) ermöglichender Schlitz (11) vorhanden ist.

3. Elektrisches Installationsgerät nach einem der Ansprüche 1 oder 2, **dadurch gekennzeichnet, dass** die Krallenarme (9) an zwei gegenüberliegende Seitenbereiche der flächig ausgeführten Basis (8) angeformt sind und sich von dieser wegerstreckend angeordnet sind.

4. Elektrisches Installationsgerät nach einem der Ansprüche 1 bis 3, **dadurch gekennzeichnet, dass** zwischen den beiden Krallenarmen (9) stirnseitig an die Spreizkralle (2) ein Versteifungssteg (20) angeformt ist.

5. Elektrisches Installationsgerät nach einem der Ansprüche 1 bis 4, **dadurch gekennzeichnet, dass** das Gehäuse zumindest teilweise aus Thermoplast besteht.

6. Elektrisches Installationsgerät nach einem der Ansprüche 1 bis 5 **dadurch gekennzeichnet, dass** das Gehäuse zumindest teilweise aus Duroplast besteht.

7. Elektrisches Installationsgerät nach einem der Ansprüche 1 bis 6 **dadurch gekennzeichnet, dass** an das Gehäuse zur Befestigung des Trägers (1) zwei Haltewände (13) angeformt sind.

8. Elektrisches Installationsgerät nach einem der Ansprüche 1 bis 7 **dadurch gekennzeichnet, dass** an das Gehäuse und an den Träger (1) miteinander in Wirkverbindung kommende Befestigungsmittel (14, 15) angeformt sind.

9. Elektrisches Installationsgerät nach einem der Ansprüche 1 bis 8 **dadurch gekennzeichnet, dass** an die an das Gehäuse angeformten Haltewände (13), jeweils zumindest ein den Befestigungsmitteln (14, 15) zugeordneter Sicherungskümpel (17) angeformt ist.

## Claims

1. Electrical installation device for building system engineering, having a housing made of plastic which comprises a base member (5) and a cover member and is provided for accommodating functional elements and on which a support (1) is located and which is equipped with at least one fastening facility having a claw (2) and an expanding screw (3), with the claw (2) having a flatly-designed base (8) onto which two claw arms (9) extending from the same are integrally formed in such a manner that the claw (2) has a U-shaped contour and that the flatly-designed base (8) cooperates directly with the head (10) of the expanding screw (3) on the one hand and comes to rest directly on a bearing arrangement (7) moulded onto the housing on the other hand, **characterised in that** the cover member (6) of the housing has a pocket (4) for the purpose of receiving the claw (2) of each fastening facility and that two slit-like receiving recesses (16) corresponding to each claw (2) are moulded into the outer wall of the base member (5) below the pocket (4) for the purpose of accommodating the two claw arms (9), and that a retaining flange (19), which is integrally formed onto the flatly-designed base (8) of each claw (2), forms an operative connection to the associated inner side of one of the two supporting walls (13) moulded onto the cover member (6).

2. Electrical installation device according to Claim 1, **characterised in that** a slit (11) is provided in the flat-designed base (8) of the claw (2), enabling the shank of the expanding screw (3) to pass through.

3. Electrical installation device according to Claim 1 or Claim 2, **characterised in that** the claw arms (9) are integrally formed onto two opposing side areas of the flat-designed base (8) and are arranged extending away from the same.

4. Electrical installation device according to any of Claims 1 to 3, **characterised in that** a stiffening element (20) is moulded onto the front face of the claw (2) between the two claw arms (9).

5. Electrical installation device according to any of Claims 1 to 4, **characterised in that** the housing is at least partially composed of thermoplastic.

6. Electrical installation device according to any of Claims 1 to 5, **characterised in that** the housing is at least partially composed of duroplast.

7. Electrical installation device according to any of Claims 1 to 6, **characterised in that** two supporting walls (13) are moulded onto the housing for the purpose of anchoring the support (1).

8. Electrical installation device according to any of Claims 1 to 7, **characterised in that** fastening means (14, 15) which form an operative connection with each other are moulded onto the housing and onto the support (1).

9. Electrical installation device according to any of Claims 1 to 8, **characterised in that** at least one securing flange (17) assigned to the fastening means (14, 15) is integrally formed onto each of the supporting walls (13) moulded onto the housing.

## Revendications

1. Appareil d'installation électrique pour les installations techniques systémiques des bâtiments et de la domotique, comportant un boîtier en plastique composé d'un élément socle (5) et d'un élément couvercle, prévu pour accueillir des éléments fonctionnels, boîtier auquel est fixé un support (1) et qui est équipé d'au moins un dispositif de fixation présentant une griffe d'expansion (2) et une vis d'expansion (3) pour la fixation dans une boîte d'installation, la griffe d'expansion (2) présentant une base (8) réalisée sous forme plate, sur laquelle sont moulés deux bras de griffe (9) s'éloignant de cette base plate, et ce de telle sorte que la griffe d'expansion (2) présente une forme en U et que la base plate (8) d'une part agisse directement avec la tête (10) de la vis d'expansion (3), d'autre part s'appuie directement à un dispositif de dépôt (7) moulé au boîtier, **caractérisé en ce que** l'élément couvercle (6) du boîtier présente une poche (4) accueillant la griffe d'expansion (2) de chaque dispositif de fixation, et **en ce que**, pour l'accueil des deux bras (9) de chaque griffe d'expansion (2), deux évidements d'accueil (16) en forme de fente sont formés dans la paroi extérieure de l'élément socle (5), et **en ce que** une pièce de maintien emboutie (19) est moulée sur la base plate (8) de chaque griffe d'expansion (2), pièce de maintien emboutie agissant en commun avec le côté intérieur correspondant de l'une des deux parois de maintien (13) moulées sur l'élément couvercle (6).

2. Appareil d'installation électrique selon la revendication 1, **caractérisé en ce que** la base plate (8) de la griffe d'expansion (2) comporte une fente (11) permettant le passage de la tige de la vis d'expansion (3).

3. Appareil d'installation électrique selon l'une des revendications 1 ou 2, **caractérisé en ce que** les bras de griffe (9) sont moulés à deux zones opposées de la base plate (8) et sont placés de telle sorte qu'ils s'éloignent de celle-ci.

4. Appareil d'installation électrique selon l'une des revendications 1 à 3, **caractérisé en ce que** une baguette de renforcement (20) est moulée du côté avant à la griffe d'expansion (2) entre les deux bras de griffe (9).

5. Appareil d'installation électrique selon l'une des revendications 1 à 4, **caractérisé en ce que** le boîtier est au moins en partie en matière ou matériau thermoplastique.

6. Appareil d'installation électrique selon l'une des revendications 1 à 5, **caractérisé en ce que** le boîtier est au moins en partie en matière ou matériau thermodurcissable.

7. Appareil d'installation électrique selon l'une des revendications 1 à 6, **caractérisé en ce que** deux parois de maintien (13) sont moulées au boîtier pour la fixation du support (1).

8. Appareil d'installation électrique selon l'une des revendications 1 à 7, **caractérisé en ce que** des éléments de fixation (14, 15) agissant ensemble sont moulés au boîtier et au support (1).

9. Appareil d'installation électrique selon l'une des revendications 1 à 8, **caractérisé en ce que** au moins un élément de sécurité embouti (17) attribué aux éléments de fixation (14, 15) est respectivement moulé sur les parois de maintien (13) moulées au boîtier.
